# EUROPÄISCHE PATENTSCHRIFT

(11) **EP 2 716 485 B1**
(45) Veröffentlichungstag und Bekanntmachung des Hinweises auf die Patenterteilung: **27.05.2015**
(21) Anmeldenummer: 12006934.9
(22) Anmeldetag: 06.10.2012
(51) Int. Cl.: B60K 26/00

(54) **Arbeitsgerät mit einem Fahrantrieb**
Work equipment with a propulsion drive
Outil de travail avec un entraînement

(43) Veröffentlichungstag der Anmeldung: 09.04.2014
(73) Patentinhaber: Viking GmbH, 6336 Langkampfen (AT)
(72) Erfinder: Strazzeri, Sandro, 89073 Ulm (DE); Lippl, Wilhelm, 89359 Großkötz (DE); Kempfle, Thomas, 89346 Bibertal (DE)
(74) Vertreter: Reinhardt, Annette

(56) Entgegenhaltungen:
- US-A- 3 691 863
- US-A- 4 040 306
- US-A- 4 523 489

## Beschreibung

Die Erfindung betrifft ein Arbeitsgerät mit einem Fahrantrieb, insbesondere einen Aufsitzmäher oder dergleichen, der im Oberbegriff des Anspruchs 1 angegebenen Gattung.

Aus der DE 699 13 691 T2 ist ein Mäher mit einem Fahrantrieb bekannt, bei dem zwischen Vorwärtsfahrt und Rückwärtsfahrt über einen Getriebeschalthebel umgeschaltet werden kann. Das Gaspedal wirkt auf eine Spannrolle eines Antriebsriemens. Die Betätigung des Getriebes und die Umschaltung zwischen Vorwärtsfahrt und Rückwärtsfahrt ist unabhängig von der Betätigung des Gaspedals.

Aus der DE 10 2010 017 988 A1 ist ein Aufsitzmäher mit einem Fahrantrieb bekannt, der zur Vorwärtsfahrt und Rückwärtsfahrt separate Gaspedale vorsieht

Die US 4,040,306 A und die US 4,523,489 A zeigen jeweils ein gattungsgemäßes Arbeitsgerät mit einer Umschalteinrichtung, über die mit einem Gaspedal ein Stellelement in unterschiedlichen Richtungen bewegt werden kann. Hierfür ist jeweils eine Scheibe mit einer Nut vorgesehen. In der Nut kann ein Zapfen in verschiedene Stellungen verstellt werden, wobei je nach Stellung des Zapfens in der Nut die Betätigung des Gaspedals eine Schwenkbewegung der Scheibe im oder entgegen dem Uhrzeigersinn bewirkt.

Der Erfindung liegt die Aufgabe zugrunde, ein Arbeitsgerät mit Fahrantrieb der gattungsgemäßen Art zu schaffen, das einen einfachen Aufbau besitzt und eine einfache, ergonomische Bedienung ermöglicht.

Diese Aufgabe wird durch ein Arbeitsgerät mit den Merkmalen des Anspruchs 1 gelöst.

Es ist vorgesehen, dass die Richtung, in der das Stellelement bei einer Betätigungsbewegung des Gaspedals in Betätigungsrichtung verstellt wird, je nach Schaltstellung des Schalthebels unterschiedlich ist. Dadurch bewirkt eine Betätigungsbewegung des Gaspedals in Betätigungsrichtung in Abhängigkeit von der Schaltstellung des Schalthebels entweder eine Vorwärtsfahrt oder eine Rückwärtsfahrt. Die Umschalteinrichtung kann einen einfachen Aufbau besitzen und robust und mit wenig Einzelteilen aufgebaut werden. Dadurch ergibt sich eine einfache und robuste Ansteuerung des Fahrantriebs. Die Umschalteinrichtung ist vorteilhaft mechanisch aufgebaut. Dabei sind unterschiedliche Gestaltungen für die Umschalteinrichtung möglich, die die gewünschte Bewegung des Stellelements bewirken.

Das Gaspedal ist mit einem Gasgestänge verbunden, das beim Betätigen des Gaspedals in Betätigungsrichtung um eine Drehachse verschwenkt wird. Die Umschalteinrichtung besitzt ein Umschaltelement, das um eine Lagerachse schwenkbar an dem Gasgestänge gelagert ist. Die Drehachse des Gasgestänges und die Lagerachse des Umschaltelements besitzen einen ersten Abstand zueinander. Bei einer Verschwenkung des Gasgestänges um die Drehachse wird dadurch die Lagerachse des Umschaltelements auf einem Kreisbogen um die Drehachse des Gasgestänges bewegt.

Das Umschaltelement wirkt auf das Stellelement und verschwenkt in der ersten Schaltstellung des Schalthebels in einer ersten Schwenkrichtung und in der zweiten Schaltstellung in einer zweiten Schwenkrichtung. Die zweite Schwenkrichtung ist dabei die Gegenrichtung zur ersten Schwenkrichtung. Über ein Verschwenken in die beiden Drehrichtungen kann auf einfache Weise eine Verstellung des Stellelements in die beiden Richtungen erreicht werden. Beim Betätigen eines Bremspedals wird das Stellelement vorteilhaft vom Umschaltelement entkoppelt. Bei betätigtem Bremspedal bewirkt eine Bewegung des Umschaltelements dadurch keine Bewegung des Stellelements. Das Stellelement ist vorteilhaft in Richtung auf eine unbetätigte Stellung gefedert gelagert und wird nach dem Entkoppeln in die unbetätigte Stellung verstellt.

Das Umschaltelement besitzt eine erste Schwenkachse und eine zweite Schwenkachse. Die erste Schwenkachse besitzt zur Drehachse des Gasgestänges einen zweiten Abstand, der größer als der erste Abstand ist. Die zweite Schwenkachse besitzt zur Drehachse des Gasgestänges einen dritten Abstand, der kleiner als der erste Abstand ist. Wird das Umschaltelement auf einem Kreisbogen um die Drehachse des Gasgestänges bewegt, so verschwenkt das Umschaltelement abhängig davon, ob es um die erste oder um die zweite Schwenkachse verschwenkt, in der ersten oder in der zweiten Schwenkrichtung.

Vorteilhaft besitzt die erste Schwenkachse zur Lagerachse des Umschaltelements einen vierten Abstand, der kleiner als ein fünfter Abstand der zweiten Schwenkachse zur Lagerachse ist. Dadurch lassen sich unterschiedliche Übersetzungsverhältnisse zwischen dem Betätigungsweg des Gaspedals und dem Weg des Stellelements für Vorwärtsfahrt und Rückwärtsfahrt realisieren. Vorteilhaft ist das Übersetzungsverhältnis so gewählt, dass eine Betätigung des Gashebels bei Vorwärtsfahrt zu einem größeren Weg des Stellelements führt als die Betätigung des Gashebels um den gleichen Betätigungsweg bei Rückwärtsfahrt. Dadurch wird bei Rückwärtsfahrt ein feinfühliges Gasgeben und bei Vorwärtsfahrt ein schnelles Gasgeben ermöglicht.

Vorteilhaft besitzt die Umschalteinrichtung eine Schaltkulisse, die in einer ersten Stellung die erste Schwenkachse des Umschaltelements fixiert und die zweite Schwenkachse beweglich freigibt, so dass das Umschaltelement um die erste Schwenkachse verschwenken kann. In einer zweiten Stellung der Schaltkulisse ist vorgesehen, dass die Schaltkulisse die zweite Schwenkachse fixiert und die erste Schwenkachse beweglich freigibt, so dass das Umschaltelement um die zweite Schwenkachse verschwenken kann. Dadurch werden in Verbindung mit den unterschiedlichen Abständen der Schwenkachsen zur Drehachse des Gasgestänges auf einfache Weise unterschiedliche Schwenkrichtungen des Umschaltelements in den beiden Schaltstellungen des Schalthebels, die den beiden Stellungen der Schaltkulisse zugeordnet sind, erreicht.

Ein einfacher, robuster Aufbau ergibt sich, wenn an der ersten Schwenkachse ein erster Hebel gelagert ist und an der zweiten Schwenkachse ein zweiter Hebel, wobei die Schaltkulisse mit den Hebeln zusammenwirkt und in ihrer ersten Stellung den ersten Hebel fixiert und in ihrer zweiten Stellung den zweiten Hebel fixiert. Alternativ können die Schwenkachsen jedoch beispielsweise auch über einen in einer Führungsnut zwischen den beiden Schwenkachsen beweglichen Bolzen fixiert werden. Auch andere konstruktive Gestaltungen der Fixierung von jeweils einer Schwenkachse können vorgesehen sein.

Vorteilhaft besitzen die Hebel jeweils ein hakenförmiges Ende, in das die Schaltkulisse zur Fixierung des Hebels eingreift. Um ein Umschalten zwischen Vorwärtsfahrt und Rückwärtsfahrt zu verhindern, während das Gaspedal betätigt ist, ist vorgesehen, dass der jeweils nicht von der Schaltkulisse gesperrte Hebel bei betätigtem Gaspedal ein Verstellen des Schalthebels sperrt. Dies kann beispielsweise auf einfache Weise dadurch erfolgen, dass der nicht fixierte Hebel beim Verschwenken des Umschaltelements in den Bewegungsweg der Schaltkulisse verstellt wird und dadurch ein Verstellen der Schaltkulisse blockiert. Ein Verstellen der Schaltkulisse in die der entgegengesetzten Fahrtrichtung zugeordnete Stellung ist dadurch auf einfache Weise ohne zusätzliche Bauteile verhindert.

Vorteilhaft verrastet die Schaltkulisse in der ersten Stellung und in der zweiten Stellung. Dadurch wird die Bedienung vereinfacht und die Verstellung der Schaltkulisse in Zwischenstellungen, in denen kein Hebel sicher fixiert ist, kann vermieden werden. Die Verrastung kann auf einfache Weise durch eine Feder der Umschalteinrichtung erreicht werden. Die Feder rastet dabei in der ersten und der zweiten Stellung vorteilhaft jeweils in einer Rastvertiefung einer Rastkontur der Schaltkulisse ein. Insbesondere wirkt der Schalthebel auf die Schaltkulisse und verstellt die Schaltkulisse zwischen der ersten Stellung und zweiten Stellung. In der ersten Schaltstellung des Schalthebels ist die Schaltkulisse dabei vorteilhaft in der ersten Stellung und in der zweiten Schaltstellung des Schalthebels in der zweiten Stellung angeordnet. Vorteilhaft bewirkt eine Bewegung des Stellelements in der ersten Richtung eine Rückwärtsfahrt und eine Bewegung in der zweiten Richtung eine Vorwärtsfahrt. Dies ist insbesondere dann vorteilhaft, wenn der Abstand der ersten Schwenkachse zur Lagerachse des Umschaltelements kleiner als der der zweiten Schwenkachse zur Lagerachse des Umschaltelements ist. Dadurch wird ein feinfühliges Gasgeben beim Rückwärtsfahren ermöglicht.

Das Arbeitsgerät ist vorteilhaft ein Aufsitzmäher. Der Antriebsmotor treibt vorteilhaft mindestens ein Messer des Aufsitzmähers rotierend an.

Ein Ausführungsbeispiel der Erfindung wird im Folgenden anhand der Zeichnung erläutert. Es zeigen:
- Fig. 1: eine perspektivische Darstellung eines Aufsitzmähers,
- Fig. 2: eine perspektivische Ansicht des Gasgestänges, des Bremsgestänges und der Umschalteinrichtung des Aufsitzmähers aus Fig. 1 bei Rückwärtsfahrt,
- Fig. 3: eine ausschnittsweise Draufsicht auf die Anordnung aus Fig. 2 bei unbetätigtem Gaspedal,
- Fig. 4: eine perspektivische Ansicht der Anordnung aus Fig. 3 bei unbetätigtem Gaspedal,
- Fig. 5: eine ausschnittsweise perspektivische Ansicht der Umschalteinrichtung in der Stellung aus Fig. 2,
- Fig. 6: eine perspektivische Darstellung der Umschalteinrichtung in einer Stellung für die Vorwärtsfahrt bei unbetätigtem Gaspedal,
- Fig. 7: eine schematische Darstellung der Lage der Drehachsen und Schwenkachsen der Umschalteinrichtung,
- Fig. 8: eine Draufsicht auf die Schaltkulisse der Umschalteinrichtung in der Stellung aus Fig. 6,
- Fig. 9: eine perspektivische Darstellung der Anordnung aus Fig. 6 bei betätigtem Gaspedal.

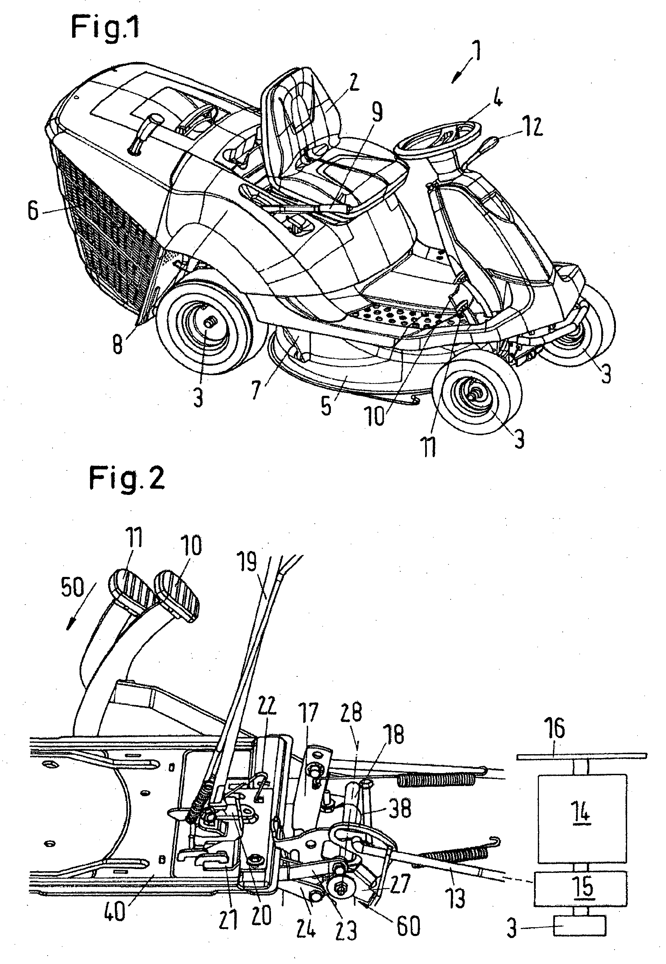

Fig. 1 zeigt als Ausführungsbeispiel für ein Arbeitsgerät mit einem Fahrantrieb einen Aufsitzmäher 1. Anstatt bei einem Aufsitzmäher kann die nachfolgend beschriebene Umschalteinrichtung für die Umschaltung zwischen Vorwärtsfahrt und Rückwärtsfahrt jedoch auch bei anderen Arbeitsgeräten mit einem Fahrantrieb einsetzbar sein. Der Aufsitzmäher 1 besitzt einen Sitz 2 für den Bediener, der an einer Abdeckhaube 8 angeordnet ist. Benachbart zum Sitz 2 ragt ein Höhenverstellhebel 9 durch die Abdeckhaube 8. Mit dem Höhenverstellhebel 9 kann die Schnitthöhe des Aufsitzmähers 1 eingestellt werden. Dabei wird die Position eines Mähwerks 5 verändert, das ein oder mehrere rotierend angetriebene Messer umfasst. Vom Mähwerk 5 führt ein Grasauswurfkanal 7 zu einem Grasfangbehälter 6.

Der Aufsitzmäher 1 besitzt ein Steuerrad 4, um die vorderen der Räder 3 anzulenken. Der Aufsitzmäher 1 besitzt im Ausführungsbeispiel vier Räder 3. Benachbart zum Steuerrad 4 ist ein Schalthebel 12 angeordnet, mit dem der Bediener zwischen Vorwärtsfahrt und Rückwärtsfahrt umschalten kann. Der Aufsitzmäher 1 besitzt außerdem ein Bremspedal 10 sowie ein benachbart zum Bremspedal 10 angeordnetes Gaspedal 11. Das Bremspedal 10 und das Gaspedal 11 sind vom Bediener mit dem Fuß zu betätigen.

Wie Fig. 2 zeigt, ist das Gaspedal 11 an einem Gasgestänge 18 festgelegt, das um eine Drehachse 28 schwenkbar gelagert ist. Eine Betätigung des Gaspedals 11 in einer Betätigungsrichtung 50 wird über das Gasgestänge 18 und eine Umschalteinrichtung 60 in eine Stellbewegung eines Stellelements 13 übersetzt. In Gegenrichtung zur Betätigungsrichtung 50 ist das Gaspedal 11 vorteilhaft gefedert gelagert, so dass das Gaspedal 11 beim Loslassen in seine unbetätigte Stellung zurückschwenkt. Das Bremspedal 11 ist an einem Bremsgestänge 17 festgelegt.

Wie Fig. 2 schematisch zeigt, wirkt das Stellelement 13 auf ein Getriebe 15. Über das Getriebe 15 ist ein Antriebsmotor 14 des Aufsitzmähers 1 mit den Rädern 3 gekoppelt. Dabei sind vorteilhaft nur die beiden Hinterräder des Aufsitzmähers 1 angetrieben. Der Antriebsmotor 14 treibt außerdem das Werkzeug, nämlich ein oder mehrere Messer 16 rotierend an. Die Darstellung in Fig. 2 ist lediglich schematisch. Der Antrieb des Messers 16 bzw. der Messer 16 erfolgt üblicherweise über eine Messerbremskupplung. Diese kann beispielsweise über einen Antriebsriemen vom Antriebsmotor 14 angetrieben sein. Das Getriebe 15 treibt die Räder 3 in Abhängigkeit des Stellwegs des Stellelements 13 in einer Drehrichtung zur Vorwärtsfahrt oder einer Drehrichtung zur Rückwärtsfahrt an. Wie schnell die Räder 3 angetrieben werden, ist abhängig vom Stellweg des Stellelements 13, der wiederum vom Betätigungsweg des Gaspedals 11 abhängt.

Die Umschalteinrichtung 60 umfasst ein am Gasgestänge 18 gelagertes Umschaltelement 27. Am Umschaltelement 27 sind ein erster Hebel 23 und ein zweiter Hebel 24 festgelegt. Die dem Umschaltelement 27 abgewandten Enden der Hebel 23 und 24 wirken mit einer Schaltkulisse 21 zusammen, deren Gestaltung im Folgenden noch näher beschrieben wird. Die Stellung der Schaltkulisse 21 legt die Fahrtrichtung fest. An der Schaltkulisse 21 greift ein Stellhebel 20 an, der drehfest mit einer Schaltstange 19 verbunden ist. An der Schaltstange 19 ist der Schalthebel 12 (Fig. 1) gehalten. Die Schaltkulisse 21 ist an einem Chassis 40 des Aufsitzmähers 1 angeordnet. Auf dem Chassis 40 liegen die freien Enden der Hebel 23 und 24 auf. Die freien Enden der Hebel 23 und 24 können, soweit sie nicht von der Schaltkulisse 21 gesperrt sind, an der Oberseite des Schalthebels 40 entlang gleiten.

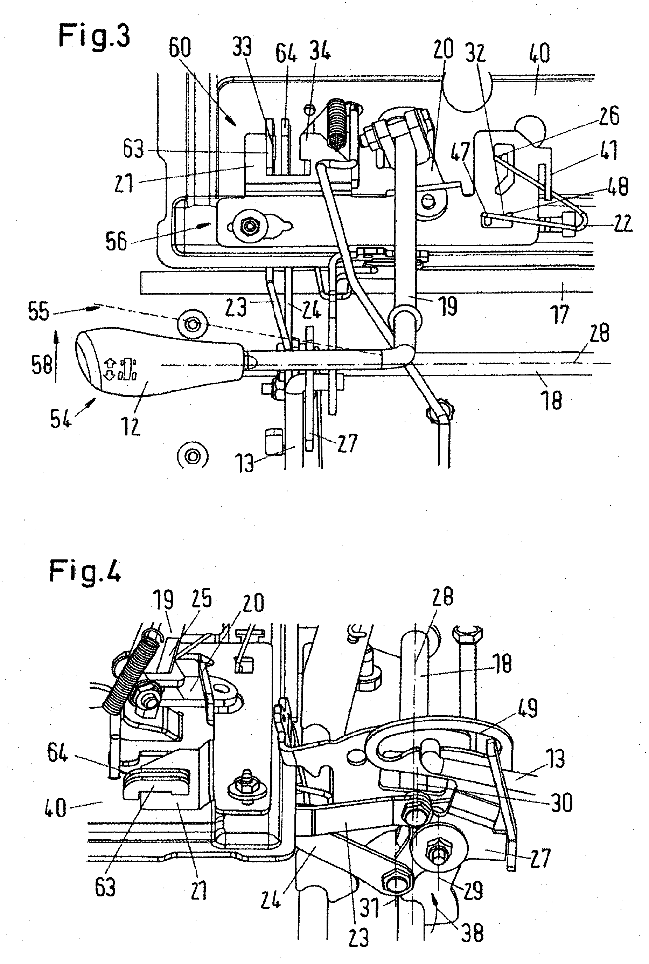

Fig. 3 zeigt die Anordnung des Schalthebels 12, der Schaltstange 19 und des Stellhebels 20 im Einzelnen. Der Stellhebel 20 greift in eine Lasche der Schaltkulisse 21 ein. In Fig. 3 ist der Schalthebel 12 in einer ersten Schaltstellung 54 für die Rückwärtsfahrt angeordnet. Zur Verstellung in eine zweite, in Fig. 3 gestrichelt angedeutete Schaltstellung 55 für die Vorwärtsfahrt muss der Schalthebel 12 in Richtung des Pfeils 58 verschwenkt werden.

In der in Fig. 3 gezeigten ersten Schaltstellung 54 für die Rückwärtsfahrt befindet sich die Schaltkulisse 21 in einer ersten Stellung 56. Die Schaltkulisse 21 besitzt einen ersten Sperrabschnitt 33, der mit dem ersten Hebel 23 zusammenwirkt, sowie einen zweiten Sperrabschnitt 34, der mit dem zweiten Hebel 24 zusammenwirken kann. In der ersten Stellung 56 der Schaltkulisse 21 greift der erste Sperrabschnitt 33 unter ein freies Ende 63 des ersten Hebels 23 und fixiert dieses dadurch. Das freie Ende 63 des ersten Hebels 23 ist hakenförmig ausgebildet. Es kann auch vorgesehen sein, dass der Hebel 23 eine Öffnung oder dergleichen besitzt, in die der Sperrabschnitt 33 eingreift. Das freie Ende 64 des zweiten Hebels 24, das im Ausführungsbeispiel ebenfalls hakenförmig ausgebildet ist, kann sich an der Oberseite des Chassis 40 in Längsrichtung des zweiten Hebels 24 bewegen. Wie Fig. 3 auch zeigt, ist das Stellelement 13 als Betätigungsstange ausgebildet, deren abgebogenes Ende in das Umschaltelement 27 eingreift.

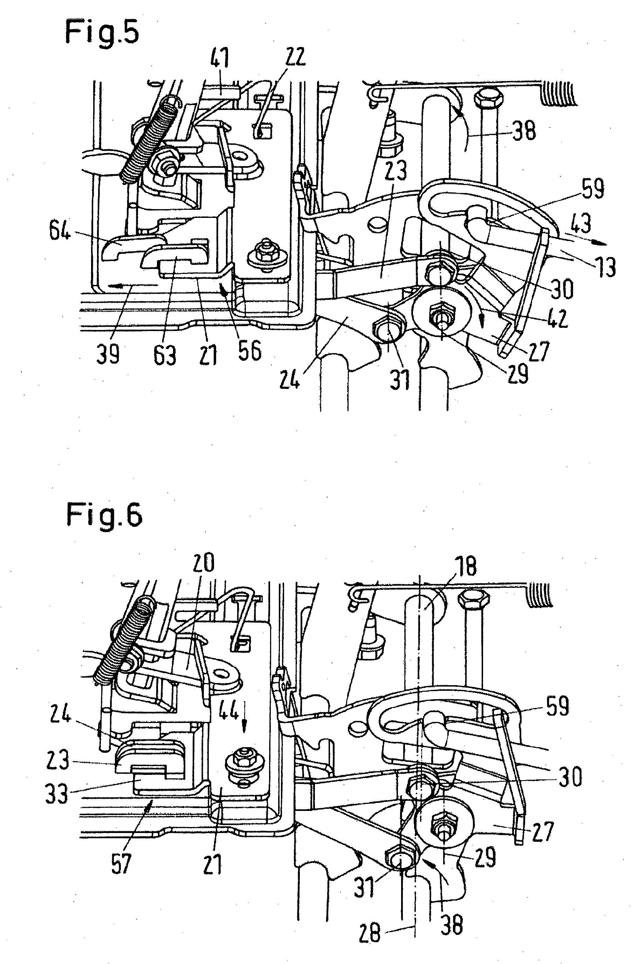

Fig. 3 zeigt auch die Rasteinrichtung für die Schaltkulisse 21. Die Schaltkulisse 21 verrastet in der ersten Stellung 56 und in einer zweiten Stellung 57, die in Fig. 6 gezeigt ist. In den Stellungen 56 und 57 ist jeweils einer der Hebel 23, 24 von der Schaltkulisse 21 blockiert. Die Schaltkulisse 21 besitzt eine Rastkontur 32, die eine erste Rastvertiefung 47 und eine zweite Rastvertiefung 48 besitzt. An der Schaltkulisse 21 ist eine Feder 22, die als gebogenes Drahtteil ausgebildet ist, gehalten. Die Schaltkulisse 21 besitzt eine Federeinhängung 26, an der ein Ende der Feder 22 eingehängt ist. Außerdem ist an der Schaltkulisse 21 ein Halter 41 für die Feder 22 vorgesehen, der die Feder 22 hält. Das zweite Ende der Feder 22 ist in der in Fig. 3 gezeigten ersten Stellung 56 der Schaltkulisse 21 in der ersten Rastvertiefung 47 angeordnet. In der Schaltstellung für die Vorwärtsfahrt rastet das zweite Ende der Feder 22 in der Rastvertiefung 48 ein.

Wie Fig. 4 zeigt, ist das Umschaltelement 27 um eine Lagerachse 29 drehbar am Gasgestänge 18 gehalten. Die Lagerachse 29 besitzt dabei einen Abstand zur Drehachse 28 des Gasgestänges 18, so dass die Lagerachse 29 bei einer Betätigung des Gaspedals 11 in Betätigungsrichtung 50 (Fig. 2), die eine Verschwenkung des Gasgestänges 18 in Richtung des Pfeils 38 (Fig. 4) zur Folge hat, auf einem Kreisbogen um die Drehachse 28 bewegt wird. Der erste Hebel 23 ist um eine erste Schwenkachse 30 schwenkbar am Umschaltelement 27 gelagert. Der zweite Hebel 24 ist um eine zweite Schwenkachse 31 schwenkbar am Umschaltelement 27 gelagert. Die Schwenkachse 31 befindet sich dabei näher an der Drehachse 28 als die Lagerachse 29, während die erste Schwenkachse 30 weiter entfernt von der Drehachse 28 ist als die Lagerachse 29. Die Schwenkachsen 30 und 31, die Lagerachse 29 und die Drehachse 28 sind vorteilhaft parallel zueinander angeordnet.

Wie Fig. 4 auch zeigt, besitzt das Umschaltelement 27 eine Auskoppelnut 49. Die Auskoppelnut 49 besitzt eine Vertiefung 59, in der das Stellelement 13 bei Vorwärtsfahrt und bei Rückwärtsfahrt eingehängt ist. Wenn das Stellelement 13 aus der Vertiefung 59 in die Auskoppelnut 49 ausgelenkt wurde, kann sich das Umschaltelement 27 bewegen, ohne dass das Stellelement 13 bewegt wird. Das Stellelement 13 wird vorteilhaft beim Betätigen des Bremspedals 10 in die Auskoppelnut 49 ausgelenkt.

Verschwenkt das Gasgestänge 18 aufgrund einer Betätigung des Gaspedals 11 in Richtung des Pfeils 38, so bewegt sich die Lagerachse 29 in den Figuren 4 und 5 nach links. Bei der in den Figuren 4 und 5 gezeigten ersten Stellung 56 der Schaltkulisse 21 ist der Hebel 23 von der Schaltkulisse 21 fixiert. Dadurch verschwenkt das Umschaltelement 27 um die erste Schwenkachse 30 in Richtung des Pfeils 42, in Fig. 5 also im Uhrzeigersinn. Dadurch wird das am Umschaltelement 27 in einem Abstand zur Lagerachse 29 gehaltene Stellelement 13 in einer ersten Richtung 43 bewegt. Wie Fig. 5 zeigt, weicht das freie Ende 64 des zweiten Hebels 24 aus, da sich die zweite Schwenkachse 31 um die erste Schwenkachse 30 bewegt. Dabei führt der zweite Hebel 24 eine Bewegung in Richtung des Pfeils 39 aus, wobei das freie Ende des Hebels 24 am Chassis 40 entlang gleitet. Die Position der Schwenkachse 30 kann sich dadurch, dass sich die Lagerachse 29 auf einer Kreisbahn um die Drehachse 28 bewegt, geringfügig ändern. Diese geringfügige Änderung kann vom ersten Hebel 23 ohne Weiteres ausgeglichen werden.

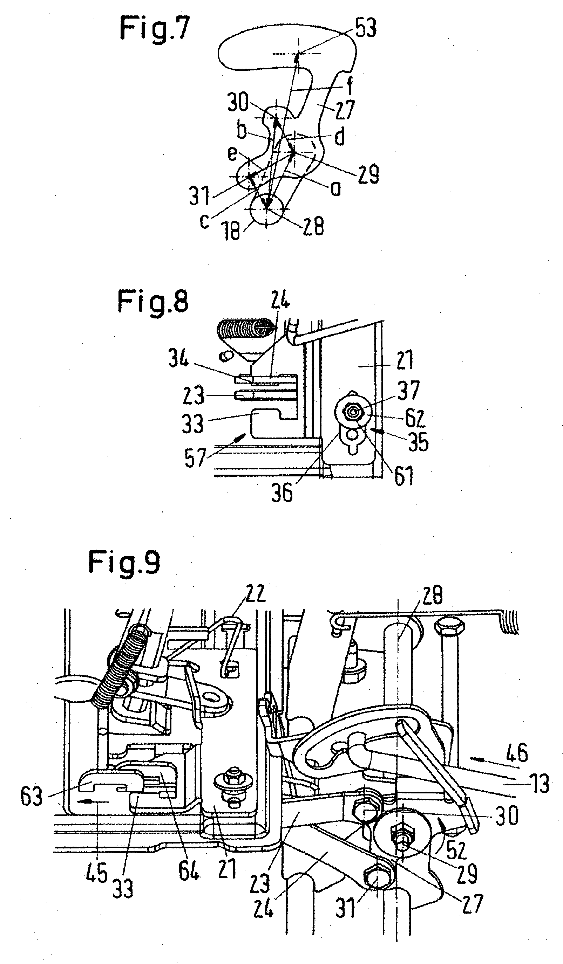

Um die Schaltkulisse 21 in die in Fig. 6 gezeigte zweite Stellung 57 für die Vorwärtsfahrt zu verstellen, wird der Schalthebel 12 in Richtung des Pfeils 58 (Fig. 3) bewegt. Dadurch wird die Schaltkulisse 21 in Richtung des Pfeils 44 (Fig. 6) verschoben. Der erste Sperrabschnitt 33 der Schaltkulisse 21 gelangt aus dem Bereich des ersten Hebels 23, so dass der Hebel 23 sich gegenüber dem Chassis 40 bewegen kann. Der zweite Sperrabschnitt 34 greift, wie auch Fig. 8 zeigt, in das hakenförmige Ende des zweiten Hebels 24 ein und fixiert dieses dadurch. Fig. 8 zeigt auch die Führung 35 der Schaltkulisse 21. Die Schaltkulisse 21 besitzt eine Längsnut 36, durch die eine am Chassis 40 festgelegte Schraube 37 ragt. Zwischen einer Sicherungsmutter 61, die auf die Schraube 37 aufgeschraubt ist, und der Schaltkulisse 21 ist eine Scheibe 62 angeordnet. Dadurch wird auf einfache Weise eine Längsführung der Schaltkulisse 21 erreicht. In Fig. 3 ist der Schalthebel 12 in einer ersten Schaltstellung 54 gezeigt. Wird der Schalthebel 12 durch Verstellen in Richtung des Pfeils 58 in die in Fig. 3 schematisch gezeigte zweite Schaltstellung 55 verstellt, so verschwenkt der Stellhebel 20 in die in Fig. 6 gezeigte Position und verschiebt dabei die Schaltkulisse 21 in Richtung des Pfeils 44 (Fig. 6). Wird das Gaspedal 11 in dieser Schaltstellung 55 betätigt, so verschwenkt das Gasgestänge 18 in Richtung des Pfeils 38 um die Drehachse 28. Wie Fig. 9 zeigt, ist nun die zweite Schwenkachse 31 gegenüber der Schaltkulisse 21 fixiert, so dass das Umschaltelement 27 um die zweite Schwenkachse 31 verschwenkt wird. Dabei wird das Umschaltelement 27 in einer zweiten Schwenkrichtung 52 verschwenkt, die der ersten Schwenkrichtung 42 (Fig. 5) entgegengerichtet ist. Dadurch wird das Stellelement 13 in einer zweiten Richtung 46 bewegt, die der ersten Richtung 43 (Fig. 5) entgegengerichtet ist und die eine Vorwärtsfahrt des Aufsitzmähers 1 bewirkt. Wie Fig. 9 zeigt, weicht das freie Ende 63 des Hebels 23 in Richtung des Pfeils 45 aus und gleitet über die Oberseite des Chassis 40.

Fig. 7 zeigt die Lage der Achsen und deren Abstände zueinander schematisch. Die Lagerachse 29 besitzt zur Drehachse 28 einen ersten Abstand a. Die erste Schwenkachse 30 besitzt zur Drehachse 28 einen zweiten Abstand b, der größer als der erste Abstand a ist. Die zweite Schwenkachse 31 besitzt zur Drehachse 28 einen dritten Abstand c, der kleiner als der erste Abstand a und kleiner als der zweite Abstand b ist. Die Vertiefung 59, in der das Stellelement 13 am Umschaltelement 27 gelagert ist, besitzt eine Mittelachse 53. Die Mittelachse 53 besitzt einen Abstand f zur Drehachse 28, der größer als der erste Abstand a, größer als der zweite Abstand b und größer als der dritte Abstand c ist.

Die erste Schwenkachse 30 besitzt zur Lagerachse 29 einen vierten Abstand d, der kleiner als ein fünfter Abstand e zwischen der zweiten Schwenkachse 31 und der Lagerachse 29 ist. Dadurch ergeben sich unterschiedliche Übersetzungen der Bewegung des Gaspedals 11 zur Bewegung des Stellelements 13 in Vorwärtsfahrt und in Rückwärtsfahrt. Durch geeignete Wahl der Verhältnisse der Abstände d und e kann dieses Übersetzungsverhältnis angepasst werden.

Eine Sperrung der Schwenkachsen 30 und 31 kann auch auf andere Weise erfolgen. Hierzu kann eine in anderer Weise ausgestaltete Schaltkulisse vorgesehen sein. Es kann auch vorgesehen sein, die Schwenkachsen 30 und 31 nicht indirekt über Hebel 23 und 24 zu sperren, sondern direkt, beispielsweise über einen zwischen den Schwenkachsen 30 und 31 verstellbaren Lagerbolzen. Die Schwenkachsen 30 und 31 müssen auch in fixiertem Zustand geringfügige Ausgleichsbewegungen, die aufgrund der Kreisbogenbewegung der Lagerachse 29 entstehen, zulassen.

In der Schaltstellung 56 für die Rückwärtsfahrt bewegt sich das freie Ende 64 des zweiten Hebels 24 bei betätigtem Gaspedal 11 in den Bereich, in den der zweite Sperrabschnitt 34 beim Umschalten der Fahrtrichtung verschoben wird, wie Fig. 5 zeigt. Der zweite Hebel 24 sperrt ein Umschalten der Fahrtrichtung bei betätigtem Gaspedal 11, da die Schaltkulisse 21 nicht in ihre zweite Stellung 57 verschoben werden kann. Entsprechend bewegt sich das freie Ende 63 des ersten Hebels 23 wie in Fig. 9 gezeigt in der Schaltstellung 57 für die Vorwärtsfahrt in den Bereich, in den der erste Sperrabschnitt 33 beim Umschalten von der Vorwärtsfahrt in die Rückwärtsfahrt verschoben wird. Das Verschieben der Schaltkulisse 21 in die erste Stellung 56 und damit ein Umschalten der Fahrtrichtung ist in dieser Stellung durch den ersten Hebel 23 gesperrt. Dadurch ist ein Umschalten der Fahrtrichtung bei betätigtem Gaspedal 11 nicht möglich. Zum Umschalten der Fahrtrichtung muss zunächst das Gaspedal 11 in seine unbetätigte Stellung verschwenken. Die freien Enden 63 und 64 der Hebel 23 und 24 befinden sich dann in ihrer nicht ausgelenkten Stellung, und die Schaltkulisse 21 kann zwischen ihren Stellungen 56 und 57 verstellt werden.

## Patentansprüche

1. Arbeitsgerät mit einem Fahrantrieb, wobei das Arbeitsgerät mindestens ein Rad (3) besitzt, das von einem Antriebsmotor (14) rotierend angetrieben ist, wobei das Arbeitsgerät ein Gaspedal (11) zur Einstellung der Fahrgeschwindigkeit durch den Benutzer besitzt, das in einer Betätigungsrichtung (50) betätigt werden kann, wobei die Bewegung des Gaspedals (50) in eine Bewegung eines Stellelements (13) umgewandelt wird, wobei das Arbeitsgerät einen Schalthebel (12) zur Umschaltung zwischen Vorwärtsfahrt und Rückwärtsfahrt besitzt,
wobei das Arbeitsgerät eine Umschalteinrichtung (60) besitzt, wobei die Umschalteinrichtung (60) in einer ersten Schaltstellung (54) des Schalthebels (12) eine Betätigungsbewegung des Gaspedals (11) in Betätigungsrichtung (50) in eine Bewegung des Stellelements (13) in einer ersten Richtung (43) umwandelt und wobei die Umschalteinrichtung (60) in einer zweiten Schaltstellung (55) des Schalthebels (12) eine Betätigungsbewegung des Gaspedals (11) in Betätigungsrichtung (50) in eine Bewegung des Stellelements (13) in einer zweiten, der ersten Richtung (43) entgegengesetzten Richtung (46) umwandelt, wobei das Gaspedal (11) mit einem Gasgestänge (18) verbunden ist, das beim Betätigen des Gaspedals (11) in Betätigungsrichtung (50) um eine Drehachse (28) verschwenkt wird, wobei die Umschalteinrichtung (60) ein Umschaltelement (27) besitzt, das um eine Lagerachse (29) schwenkbar an dem Gasgestänge (18) gelagert ist, und wobei die Drehachse (28) des Gasgestänges (18) und die Lagerachse (29) des Umschaltelements (27) einen ersten Abstand (a) zueinander besitzen und das Umschaltelement (27) auf das Stellelement (13) wirkt und in der ersten Schaltstellung (54) des Schalthebels (12) in einer ersten Schwenkrichtung (42) verschwenkt wird und in einer zweiten Schaltstellung (55) des Schalthebels (12) in einer zweiten, der ersten Schwenkrichtung (42) entgegen gerichteten Schwenkrichtung (52), **dadurch gekennzeichnet, dass** das Umschaltelement (27) eine erste Schwenkachse (30) und eine zweite Schwenkachse (31) besitzt, wobei die erste Schwenkachse (30) zur Drehachse (28) des Gasgestänges (18) einen zweiten Abstand (b) besitzt, der größer als der erste Abstand (a) ist und wobei die zweite Schwenkachse (31) zur Drehachse (28) des Gasgestänges (18) einen dritten Abstand (c) besitzt, der kleiner als der erste Abstand (a) ist.

2. Arbeitsgerät nach Anspruch 1,
**dadurch gekennzeichnet, dass** die erste Schwenkachse (30) zur Lagerachse (29) des Umschaltelements (27) einen vierten Abstand (d) besitzt, der kleiner als ein fünfter Abstand (e) der zweiten Schwenkachse (31) zur Lagerachse (29) ist.

3. Arbeitsgerät nach Anspruch 1 oder 2,
**dadurch gekennzeichnet, dass** die Umschalteinrichtung (27) eine Schaltkulisse (21) besitzt, die einer ersten Stellung (56) die erste Schwenkachse (30) des Umschaltelements (27) fixiert und die zweite Schwenkachse (31) beweglich freigibt, so dass das Umschaltelement (27) um die erste Schwenkachse (30) verschwenken kann, und die in einer zweiten Stellung (57) die zweite Schwenkachse (31) fixiert und die erste Schwenkachse (30) beweglich freigibt, so dass das Umschaltelement (27) um die zweite Schwenkachse (31) verschwenken kann.

4. Arbeitsgerät nach Anspruch 3,
**dadurch gekennzeichnet, dass** an der ersten Schwenkachse (30) ein erster Hebel (23) gelagert ist und in der zweiten Schwenkachse (31) ein zweiter Hebel (24), wobei die Schaltkulisse (21) mit den Hebeln (23, 24) zusammenwirkt und in ihrer ersten Stellung (56) den ersten Hebel (23) fixiert und in ihrer zweiten Stellung (57) den zweiten Hebel (24).

5. Arbeitsgerät nach Anspruch 4,
**dadurch gekennzeichnet, dass** die Hebel (23, 24) jeweils ein hakenförmiges Ende (63, 64) besitzen, in das die Schaltkulisse (21) zur Fixierung des Hebels (23, 24) eingreift.

6. Arbeitsgerät nach Anspruch 4 oder 5,
**dadurch gekennzeichnet, dass** der von der Schaltkulisse (21) freigegebene Hebel (23, 24) bei betätigtem Gaspedal (11) ein Verstellen des Schalthebels (12) sperrt.

7. Arbeitsgerät nach einem der Ansprüche 3 bis 6,
**dadurch gekennzeichnet, dass** die Schaltkulisse (21) in der ersten Stellung (56) und in der zweiten Stellung (57) verrastet.

8. Arbeitsgerät nach Anspruch 7,
**dadurch gekennzeichnet, dass** die Umschalteinrichtung (60) eine Feder (22) besitzt, die in der ersten Stellung (56) und in der zweiten Stellung (57) in jeweils einer Rastvertiefung (47, 48) einer Rastkontur (32) der Schaltkulisse (21) einrastet.

9. Arbeitsgerät nach einem der Ansprüche 3 bis 8,
**dadurch gekennzeichnet, dass** der Schalthebel (12) die Schaltkulisse (21) zwischen der ersten Stellung (56) und der zweiten Stellung (57) bewegt, wobei die Schaltkulisse (21) in der ersten Schaltstellung (54) des Schalthebels (12) in der ersten Stellung (56) und in der zweiten Schaltstellung (55) in der zweiten Stellung (57) steht.

10. Arbeitsgerät nach einem der Ansprüche 1 bis 9,
**dadurch gekennzeichnet, dass** eine Bewegung des Stellelements (13) in der ersten Richtung (43) eine Rückwärtsfahrt und eine Bewegung in der zweiten Richtung (46) eine Vorwärtsfahrt bewirkt.

11. Arbeitsgerät nach einem der Ansprüche 1 bis 10,
**dadurch gekennzeichnet, dass** das Arbeitsgerät ein Aufsitzmäher ist, und dass der Antriebsmotor (14) mindestens ein Messer (16) des Aufsitzmähers rotierend antreibt.

## Claims

1. Working implement with a travelling drive, wherein the working implement has at least one wheel (3) which is driven to rotate by a drive motor (14), wherein the working implement has an accelerator pedal (11) which can be actuated in an actuating device (50) for the adjustment of the travelling speed by the user, wherein the movement of the accelerator pedal (11) is converted into the movement of a positioning element (13), wherein the working implement has a shift lever (12) for shifting between forward and reverse travel, wherein the working implement has a changeover device (60), wherein the changeover device (60) converts in a first shifting position (54) of the shift lever (12) an actuating movement of the accelerator pedal (11) in actuating direction (50) into a movement of the positioning element (13) in a first direction (43) and wherein the changeover device (60) converts in a second shifting position (55) of the shift lever (12) an actuating movement of the accelerator pedal (11) in actuating direction (50) into a movement of the positioning element (13) in a second direction (46) opposed to the first direction (43), wherein the accelerator pedal (11) is connected to an accelerator linkage (18) which is pivoted about an axis of rotation (28) when the accelerator pedal (11) is operated in actuating direction (50), wherein the changeover device (60) has a changeover element (27) mounted on the accelerator linkage (18) and pivotable about a bearing axis (29), and wherein the axis of rotation (28) of the accelerator linkage (18) and the bearing axis (29) of the changeover element (27) have a first distance (a) from one another and the changeover element (27) acts on the positioning element (13) and is pivoted in a first pivoting direction (42) in the first shifting position (54) of the shift lever (12) and in a second pivoting direction (52) opposed to the first pivoting direction (42) in a second shifting position (55) of the shift lever (12),
**characterised in that** the changeover element (27) has a first pivoting axis (30) and a second pivoting axis (31), wherein the first pivoting axis (30) has a second distance (b) from the axis of rotation (28) of the accelerator linkage (18) which is greater than the first distance (a), and wherein the second pivoting axis (31) has a third distance (c) from the axis of rotation (28) of the accelerator linkage (18) which is less than the first distance (a).

2. Working implement according to claim 1,
**characterised in that** the first pivoting axis (30) has a fourth distance (d) from the bearing axis (29) of the changeover element (27) which is less than a fifth distance (e) of the second pivoting axis (31) from the bearing axis (29).

3. Working implement according to claim 1 or 2,
**characterised in that** the changeover device (27) has a shifting gate (21) which fixes the first pivoting axis (30) of the changeover element (27) while enabling the second pivoting axis (31) to move in a first position (56), so that the changeover element (27) can pivot about the first pivoting axis (30), and which fixes the second pivoting axis (31) while enabling the first pivoting axis (30) to move, in a second position (57), so that the changeover element (27) can pivot about the second pivoting axis (31).

4. Working implement according to claim 3,
**characterised in that** a first lever (23) is bearing-mounted on the first pivoting axis (30) and a second lever (24) is bearing-mounted on the second pivoting axis (31), wherein the shifting gate (21) acts together with the levers (23, 24), fixing the first lever (23) in its first position (56) and the second lever (24) in its second position (57).

5. Working implement according to claim 4,
**characterised in that** each of the levers (23, 24) has a hook-shaped end (63, 64), with which the shifting gate (21) engages to fix the lever (23, 24).

6. Working implement according to claim 4 or 5,
**characterised in that** the lever (23, 24) enabled by the shifting gate (21) blocks an adjustment of the shift lever (12) when the accelerator pedal (11) is operated.

7. Working implement according to any of claims 3 to 6,
**characterised in that** the shifting gate (21) latches in the first position (56) and in the second position (57).

8. Working implement according to claim 7,
**characterised in that** the changeover device (60) comprises a spring (22), which latches in a latching recess (47, 48) each of a latching contour (32) of the shifting gate (21) in the first position (56) and in the second position (57).

9. Working implement according to any of claims 3 to 8,
**characterised in that** the shift lever (12) moves the shifting gate (21) between the first position (56) and the second position (57), wherein the shifting gate (21) is in the first position (56) in the first shifting position (54) of the shift lever (12) and in the second position (57) in the second shifting position (55).

10. Working implement according to any of claims 1 to 9,
**characterised in that** a movement of the positioning element (13) in the first direction (43) causes a reverse travel and a movement in the second direction (46) causes a forward travel.

11. Working implement according to any of claims 1 to 10,
**characterised in that** the working implement is a ride-on mower and the drive motor (14) drives at least one blade (16) of the ride-on mower to rotate.

## Revendications

1. Outil de travail avec un entraînement, étant précisé que l'outil de travail comporte au moins une roue (3) qui est entraînée en rotation par un moteur d'entraînement (14), que l'outil de travail comporte une pédale d'accélérateur (11) pour le réglage de la vitesse par l'utilisateur, qui peut être actionnée dans un sens d'actionnement (50), que le déplacement de la pédale d'accélérateur (50) est transformé en un déplacement d'un élément de réglage (13), que l'outil de travail comporte un levier de vitesse (12) pour le passage entre la marche avant et la marche arrière, que l'outil de travail comporte un dispositif de manoeuvre (60), que le dispositif de manoeuvre (60), dans une première position de changement de vitesse (54) du levier de vitesse (12), transforme un déplacement d'actionnement de la pédale d'accélérateur (11) dans le sens d'actionnement (50) en un déplacement de l'élément de réglage (13) dans un premier sens (43), et que le dispositif de manoeuvre (60), dans une deuxième position de changement de vitesse (55) du levier de vitesse (12), transforme un déplacement d'actionnement de la pédale d'accélérateur (11) dans le sens d'actionnement (50) en un déplacement de l'élément de réglage (13) dans un deuxième sens (46), opposé au premier sens (43), que la pédale d'accélérateur (11) est reliée à une tringlerie d'accélérateur (18) qui, lors de l'actionnement de la pédale d'accélérateur (11) dans le sens d'actionnement (50), pivote sur un axe de rotation (28), que le dispositif de manoeuvre (60) comporte un élément de manoeuvre (27) qui est monté sur la tringlerie d'accélérateur (18) de manière à pouvoir pivoter sur un axe de palier (29), et que l'axe de rotation (28) de la tringlerie d'accélérateur (18) et l'axe de palier (29) de l'élément de manoeuvre (27) présentent un premier écartement (a), et l'élément de manoeuvre (27) agit sur l'élément de réglage (13) et, dans une première position (54) du levier de vitesse (12), pivote dans un premier sens de pivotement (42) et, dans une deuxième position (55) du levier de vitesse (12), pivote dans un deuxième sens de pivotement (52), opposé au premier sens de pivotement (42),
**caractérisé en ce que** l'élément de manoeuvre (27) comporte un premier axe de pivotement (30) et un deuxième axe de pivotement (31), étant précisé que le premier axe de pivotement (30) présente par rapport à l'axe de rotation (28) de la tringlerie d'accélérateur (18) un deuxième écartement (b), plus grand que le premier écartement (a), et que le deuxième axe de pivotement (31) présente par rapport à l'axe de rotation (28) de la tringlerie d'accélérateur (18) un troisième écartement (c), plus petit que le premier écartement (a).

2. Outil de travail selon la revendication 1,
**caractérisé en ce que** le premier axe de pivotement (30) présente par rapport à l'axe de palier (29) de l'élément de manoeuvre (27) un quatrième écartement (d), plus petit qu'un cinquième écartement (e) entre le deuxième axe de pivotement (31) et l'axe de palier (29).

3. Outil de travail selon la revendication 1 ou 2,
**caractérisé en ce que** le dispositif de manoeuvre (27) comporte une coulisse de manoeuvre (21) qui, dans une première position (56), fixe le premier axe de pivotement (30) de l'élément de manoeuvre (27) et libère de manière mobile le deuxième axe de pivotement (31), de sorte que l'élément de manoeuvre (27) peut pivoter sur le premier axe de pivotement (30), et qui, dans une deuxième position (57), fixe le deuxième axe de pivotement (31) et libère de manière mobile le premier axe de pivotement (30), de sorte que l'élément de manoeuvre (27) peut pivoter sur le deuxième axe de pivotement (31).

4. Outil de travail selon la revendication 3,
**caractérisé en ce qu'**un premier levier (23) est monté sur le premier axe de pivotement (30), et un deuxième levier (24) sur le deuxième axe de pivotement (31), étant précisé que la coulisse de manoeuvre (21) coopère avec les leviers (23, 24) et, dans sa première position (56), fixe le premier levier (23) et, dans sa deuxième position (57), fixe le deuxième levier (24).

5. Outil de travail selon la revendication 4,
**caractérisé en ce que** les leviers (23, 24) comportent chacun une extrémité en forme de crochet (63, 64) dans laquelle la coulisse de manoeuvre (21) s'accroche pour fixer le levier (23, 24).

6. Outil de travail selon la revendication 4 ou 5,
**caractérisé en ce que** le levier (23, 24) libéré par la coulisse de manoeuvre (21) bloque un déplacement du levier de vitesse (12), quand la pédale d'accélérateur (11) est actionnée.

7. Outil de travail selon l'une des revendications 3 à 6,
**caractérisé en ce que** la coulisse de manoeuvre (21) s'enclenche dans la première position (56) et dans la deuxième position (57).

8. Outil de travail selon la revendication 7,
**caractérisé en ce que** le dispositif de manoeuvre (60) comporte un ressort (22) qui, dans la première position (56) et dans la deuxième position (57), s'enclenche dans un creux d'enclenchement respectif (47, 48) d'un contour d'enclenchement (32) de la coulisse de manoeuvre (21).

9. Outil de travail selon l'une des revendications 3 à 8,
**caractérisé en ce que** le levier de vitesse (12) déplace la coulisse de manoeuvre (21) entre la première position (56) et la deuxième position (57), étant précisé que la coulisse de manoeuvre (21), dans la première position de changement de vitesse (54) du levier de vitesse (12), se trouve dans la première position (56) et, dans la deuxième position de changement de vitesse (55), se trouve dans la deuxième position (57).

10. Outil de travail selon l'une des revendications 1 à 9,
**caractérisé en ce qu'**un déplacement de l'élément de réglage (13) dans le premier sens (43) entraîne une marche arrière tandis qu'un déplacement dans le deuxième sens (46) entraîne une marche avant.

11. Outil de travail selon l'une des revendications 1 à 10,
**caractérisé en ce que** l'outil de travail est une tondeuse à gazon autoportée, et **en ce que** le moteur d'entraînement (14) entraîne en rotation au moins une lame (16) de ladite tondeuse.
